# FASCICULE DE BREVET EUROPEEN

(11) **EP 3 532 355 B1**
(45) Date de publication et mention de la délivrance du brevet: **05.08.2020**
(21) Numéro de dépôt: 17791418.1
(22) Date de dépôt: 30.10.2017
(51) Int. Cl.: B60W 30/18, B60W 30/14, B60W 50/08, B62D 15/02

(54) **PROCÉDÉ ET DISPOSITIF D'AIDE À LA CONDUITE**
VERFAHREN UND VORRICHTUNG FÜR HILFSANTRIEB
METHOD AND DEVICE FOR AIDING DRIVING

(30) Priorité: 28.10.2016 FR 1660492
(43) Date de publication de la demande: 04.09.2019
(73) Titulaire: Valeo Schalter und Sensoren GmbH, 74321 Bietigheim-Bissingen (DE)
(72) Inventeur: QUIVY, Charles-Henri, 94046 Créteil Cedex (FR); MAROUF, Mohamed, 94046 Créteil Cedex (FR)
(74) Mandataire: Claassen, Maarten Pieter
(86) Numéro de dépôt international: PCT/EP2017/077832
(87) Numéro de publication internationale: WO 2018/078173

(56) Documents cités:
- EP-A1- 1 777 143
- WO-A1-2016/146916
- DE-A1-102013 219 447
- US-A1- 2013 184 926

## Description

### DOMAINE TECHNIQUE AUQUEL SE RAPPORTE L'INVENTION

La présente invention concerne de manière générale un procédé et un dispositif d'aide à la conduite d'un véhicule.

Elle concerne plus particulièrement un dispositif d'aide à la conduite adapté à commander le véhicule pour réaliser des manœuvres de manière autonome, et un procédé mis en œuvre dans ce dispositif.

Elle s'applique de manière particulièrement intéressante dans un véhicule automobile.

### ARRIERE-PLAN TECHNOLOGIQUE

Il est connu d'équiper un véhicule automobile avec un dispositif d'aide à la conduite adapté à commander le véhicule pour réaliser une manœuvre de manière autonome, c'est-à-dire sans intervention du conducteur, ou du moins avec une intervention réduite de ce dernier. De tels dispositifs d'aide à la conduite peuvent par exemple être adaptés à commander un véhicule pour réaliser un changement de voie de circulation de manière autonome. WO 2016/146916 A1 divulgue un tel dispositif. DE102013219447 A1 divulgue l'affichage d'un message si la vitesse du véhicule précédente est plus haute que la vitesse autorisée sur la route pendant une manœuvre de dépassement.

On peut prévoir en particulier que de tels dispositifs d'aide à la conduite soient configurés pour, préalablement à une telle manoeuvre :
- afficher un message à destination du conducteur, proposant de réaliser cette manœuvre, puis
- si le conducteur actionne un bouton de validation, déclencher alors l'exécution de cette manœuvre, autonome, par le véhicule.

Avec un tel dispositif, dans un cas où deux messages proposant chacun une manœuvre différente sont affichés de manière rapprochée dans le temps, la fonction du bouton de validation mentionné ci-dessus devient ambigüe, le conducteur ne pouvant alors pas déterminer facilement si, en actionnant ce bouton, il autorise l'une, ou l'autre des manœuvres proposées.

En outre, lorsque le conducteur choisit d'actionner le bouton de validation pour autoriser une première manœuvre proposée lors de l'affichage d'un premier message, au moment où un autre message proposant une deuxième manœuvre apparaît, cela peut entraîner un déclenchement non souhaité de la deuxième manœuvre.

### OBJET DE L'INVENTION

Dans ce contexte, la présente invention propose un procédé d'aide à la conduite comprenant les étapes suivantes :
- détection de l'actionnement d'un organe de commande donné du véhicule, ladite détection déclenchant une phase de confirmation de changement de voie de circulation comprenant les étapes suivantes :
   - affichage d'un message de demande de confirmation de changement de voie de circulation par un module d'affichage, et
   - détection de l'actionnement d'un bouton de validation, la détection de l'actionnement du bouton de validation déclenchant une manœuvre autonome de changement de voie de circulation mettant fin à ladite phase de confirmation,
- détection d'une configuration routière adaptée à un changement de vitesse du véhicule, la détection de ladite configuration entraînant l'affichage d'un message de proposition de changement de vitesse du véhicule par ledit module d'affichage,
l'affichage du message de proposition de changement de vitesse étant inhibé pendant la phase de confirmation de changement de voie de circulation.

Ainsi, pendant la phase de confirmation de changement de voie de circulation, un changement de vitesse du véhicule ne peut pas être proposé au conducteur par l'intermédiaire du module d'affichage.

Pendant cette phase de confirmation, il n'y a donc pas d'ambiguïté pour le conducteur quant au fait qu'en actionnant le bouton de validation il confirme le changement de voie de circulation mentionné dans le message de demande de confirmation. Autrement formulé, il n'y a alors pas d'ambiguïté pour le conducteur quant au fait qu'en actionnant le bouton de validation il autorise le véhicule à réaliser la manœuvre autonome de changement de voie de circulation.

Du point de vue du véhicule dans lequel est mis en œuvre ce procédé d'aide à la conduite, l'actionnement du bouton de validation pendant cette phase de confirmation est également sans ambiguïté : il correspond nécessairement à la confirmation, par le conducteur, de l'autorisation d'effectuer le changement de voie de circulation.

On peut prévoir en particulier, dans le procédé décrit ci-dessus, d'exécuter l'affichage du message de proposition de changement de vitesse après ladite phase de confirmation, lorsque la configuration routière adaptée à un changement de vitesse du véhicule est détectée pendant ladite phase de confirmation.

On peut aussi prévoir en outre, dans ce procédé, qu'une manœuvre autonome de changement de vitesse du véhicule est déclenchée lorsque ledit bouton de validation est actionné après l'affichage du message de proposition de changement de vitesse.

Le conducteur peut ainsi utiliser le même bouton de validation pour autoriser aussi bien un changement de voie de circulation qu'un changement de vitesse du véhicule, et cela sans confusion possible entre ces deux manœuvres.

D'autres caractéristiques non limitatives et avantageuses du procédé d'aide à la conduite conforme à l'invention sont les suivantes :
- ladite phase de confirmation se termine lorsqu'une durée donnée s'est écoulée sans actionnement dudit bouton de validation depuis l'actionnement dudit organe de commande du véhicule ;
- le procédé comprend en outre les étapes suivantes : - détection d'une configuration routière adaptée à un changement de voie de circulation du véhicule, la détection de cette configuration routière adaptée à un changement de voie de circulation déclenchant une phase de proposition de changement de voie de circulation comprenant l'étape suivante : - affichage d'un message de proposition de changement de voie de circulation par ledit module d'affichage ;
- le déclenchement de ladite phase de confirmation met fin à la phase de proposition de changement de voie de circulation ;
- - le déclenchement de ladite phase de confirmation met fin à l'affichage du message de proposition de changement de voie de circulation ;
- la phase de proposition de changement de voie de circulation se termine lorsque le message de proposition de changement de voie de circulation a été affiché pendant une durée limite donnée ;
- l'affichage du message de proposition de changement de vitesse est inhibé pendant la phase de proposition de changement de voie de circulation ;
- lorsque la configuration routière adaptée au changement de vitesse du véhicule est détectée pendant la phase de proposition de changement de voie de circulation, alors, le message de proposition de changement de vitesse est affiché après la phase de proposition de changement de voie de circulation ;
- lorsque la configuration routière adaptée au changement de vitesse du véhicule est détectée pendant la phase de proposition de changement de voie de circulation, et que ladite phase de proposition se termine du fait du déclenchement de ladite phase de confirmation, alors, le message de proposition de changement de vitesse est affiché après la phase de confirmation de changement de voie de circulation ;
- la configuration routière adaptée à un changement de vitesse du véhicule est détectée de manière anticipée, avant que le véhicule n'atteigne une position donnée au niveau de laquelle se rencontre cette configuration adaptée à un changement de vitesse du véhicule ;
- la manœuvre autonome de changement de vitesse du véhicule est réalisée lorsque le véhicule atteint ladite position donnée ;
- lorsque la manœuvre autonome de changement de vitesse du véhicule a été déclenchée, et qu'une configuration routière adaptée à un changement de voie de circulation du véhicule est ensuite détectée, alors, l'affichage du message de proposition de changement de voie de circulation est inhibé tant que la manœuvre de changement de vitesse du véhicule n'a pas été effectuée,
- lorsque la manœuvre autonome de changement de vitesse du véhicule a été déclenchée, et qu'une configuration routière adaptée à un changement de voie de circulation du véhicule est ensuite détectée, alors, le fait que le véhicule soit situé dans une configuration adaptée à un changement de voie de circulation est testé à nouveau, après réalisation de la manœuvre autonome de changement de vitesse du véhicule ;
- l'affichage du message de proposition de changement de voie de circulation est inhibé à condition en outre que la distance entre le véhicule et ladite position donnée soit inférieure à une distance limite donnée ;
- ledit organe de commande est une manette de commande des clignotants du véhicule.

L'invention propose également un dispositif d'aide à la conduite pour un véhicule, le dispositif d'aide à la conduite comprenant une unité de commande programmée pour exécuter les étapes suivantes :
- détection de l'actionnement d'un organe de commande donné du véhicule, ladite détection déclenchant une phase de confirmation de changement de voie de circulation comprenant les étapes suivantes :
   - affichage d'un message de demande de confirmation de changement de voie de circulation par un module d'affichage, et
   - détection de l'actionnement d'un bouton de validation, la détection de l'actionnement du bouton de validation déclenchant une manœuvre autonome de changement de voie de circulation mettant fin à ladite phase de confirmation,
- détection d'une configuration routière adaptée à un changement de vitesse du véhicule, la détection de ladite configuration entraînant l'affichage d'un message de proposition de changement de vitesse du véhicule par ledit module d'affichage,
l'affichage du message de proposition de changement de vitesse étant inhibé pendant la phase de confirmation de changement de voie de circulation,
l'affichage du message de proposition de changement de vitesse étant réalisé après ladite phase de confirmation lorsque la configuration routière adaptée à un changement de vitesse du véhicule est détectée pendant ladite phase de confirmation.

Les caractéristiques optionnelles qui ont été présentées ci-dessus en termes de procédé peuvent également s'appliquer au dispositif qui vient d'être décrit.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

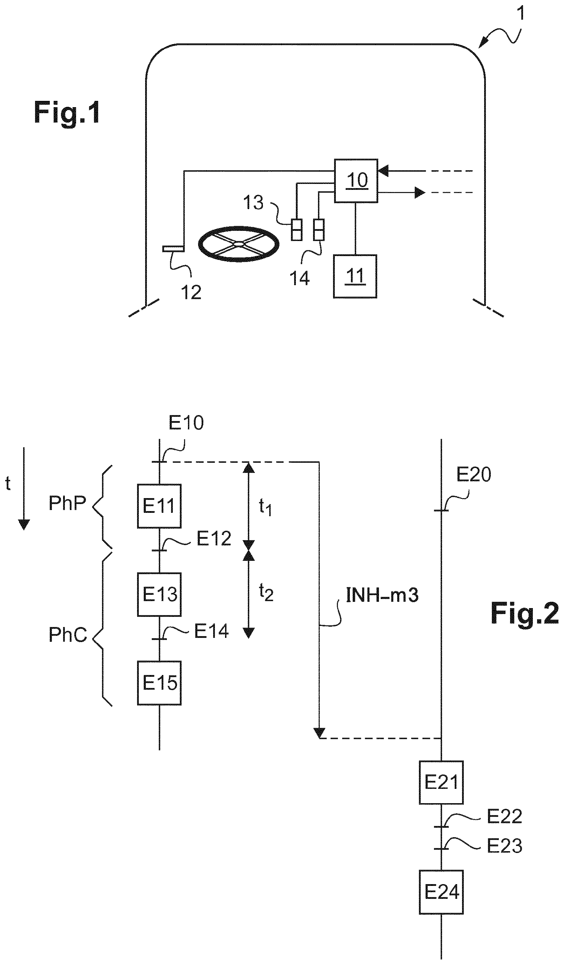

- la figure 1 représente schématiquement un véhicule automobile équipé d'un dispositif d'aide à la conduite mettant en œuvre les enseignements de l'invention,
- chacune des figures 2 à 4 représente schématiquement, sous la forme d'une séquence temporelle, des étapes exécutées au cours d'un procédé d'aide à la conduite mettant en œuvre les enseignements de l'invention.

Sur la figure 1, on a représenté schématiquement un véhicule 1 équipé d'un dispositif d'aide à la conduite 10 adapté à commander le véhicule pour réaliser des manœuvres de manière autonome.

Ce véhicule 1 est ici un véhicule automobile. Le dispositif d'aide à la conduite 10 pourrait toutefois équiper un autre type de véhicule, tel qu'un camion, ou un bus.

Le dispositif d'aide à la conduite 10 comprend plus précisément une unité de commande, comportant notamment un processeur et une mémoire, connectée à des capteurs et à des actionneurs du véhicule 1.

Cette unité de commande est adaptée à recevoir des données représentatives d'un environnement routier du véhicule, capturées par exemple par un dispositif de capture d'image tel qu'une caméra frontale et/ou par un détecteur d'obstacles à ultrasons (non représentés).

Elle est également adaptée à recevoir des données représentatives d'une action d'un conducteur du véhicule 1 sur un organe de commande 12 donné de ce véhicule, au moyen duquel le conducteur peut déclencher une manœuvre autonome de changement de voie de circulation du véhicule. Cet organe de commande 12 est réalisé ici au moyen de la manette de commande des clignotants du véhicule 1.

Ici, l'unité de commande est adaptée en outre à recevoir des données cartographiques et de positionnement du véhicule, transmises par un module de navigation du véhicule (non représenté) qui comporte un système de localisation du type GPS ou GSM (selon les acronymes anglo-saxons de « Global Positioning System » et de « Global System for Mobile Communications »). Ces données cartographiques comprennent notamment des informations relatives aux vitesses maximales autorisées sur les différentes sections routières du réseau routier emprunté par le véhicule 1, et peuvent comprendre en outre des informations relatives à l'état plus ou moins encombré du trafic routier sur ces sections.

L'unité de commande est adaptée à commander des organes de direction et des organes moteurs du véhicule pour, en fonction notamment des données mentionnées ci-dessus, réaliser :
- des manœuvres autonomes de changement de voie de circulation du véhicule, et
- des manœuvres autonomes de changement de vitesse du véhicule, c'est-à-dire pour modifier de manière autonome la vitesse de déplacement du véhicule par rapport à la voie de circulation qu'il emprunte.

L'unité de commande est également connectée à un module d'affichage 11 du véhicule, tel qu'un afficheur tête haute ou tel qu'un écran disposé par exemple au niveau du tableau de bord ou au niveau d'une console centrale du véhicule. L'unité de commande est programmée pour commander ce module d'affichage 11 de manière à afficher différentes informations et messages à destination du conducteur.

L'unité de commande est connectée aussi à un bouton de validation 13, ici un bouton de type mécanique tel qu'un bouton poussoir, ou un sélecteur mécanique comme un interrupteur, au moyen duquel le conducteur du véhicule peut autoriser l'exécution de manœuvres autonomes.

Ici, l'unité de commande est connectée aussi à un bouton d'annulation 14, également de type mécanique, au moyen duquel le conducteur du véhicule peut indiquer qu'il interdit l'exécution d'une manœuvre autonome proposée par l'unité de commande via le module d'affichage 11. En variante, le bouton de validation et/ou le bouton d'annulation pourraient être réalisés en affichant sur un écran tactile une zone définie sur laquelle appuyer, cet écran tactile pouvant par exemple faire partie du module d'affichage mentionné ci-dessus.

En variante encore, le bouton de validation et le bouton de confirmation pourraient être réalisés au moyen d'un même bouton de type mécanique, présentant par exemple une position neutre, une position de validation et une position d'annulation.

De manière remarquable, l'unité de commande du dispositif d'aide à la conduite 10 est programmée pour exécuter les étapes suivantes d'un procédé d'aide à la conduite :
E12- détection de l'actionnement de l'organe de commande 12 du véhicule 1, mentionné ci-dessus, ladite détection déclenchant une phase de confirmation PhC de changement de voie de circulation comprenant les étapes suivantes :
   E13- affichage d'un message de demande de confirmation de changement de voie de circulation par le module d'affichage 11 susmentionné, et
   E14- détection de l'actionnement du bouton de validation 13, la détection de l'actionnement du bouton de validation 13 déclenchant une manœuvre autonome de changement de voie de circulation mettant fin à ladite phase de confirmation PhC,
E20- détection d'une configuration routière adaptée à un changement de vitesse du véhicule, la détection de ladite configuration entraînant l'étape suivante
E21- affichage d'un message de proposition de changement de vitesse du véhicule par ledit module d'affichage 11,
l'affichage E21 du message de proposition de changement de vitesse étant inhibé pendant la phase de confirmation PhC de changement de voie de circulation.

Ainsi, dans ce procédé d'aide à la conduite, le déclenchement de la manœuvre autonome de changement de voie de circulation nécessite tout d'abord que le conducteur actionne l'organe de commande 12, puis, à titre de confirmation, qu'il actionne le bouton de validation 13. Il est intéressant de prévoir une telle confirmation, car cela rend le processus de demande ou d'autorisation de changement autonome de voie de circulation plus robuste.

Ainsi, par exemple, si le conducteur actionne l'organe de commande 12 par erreur ou par inadvertance, mais, ensuite, ne confirme pas le changement de voie de circulation via l'actionnement du bouton de validation 13, alors la manœuvre autonome de changement de voie de circulation n'est pas réalisée.

En cas d'actionnement inopportun de l'organe de commande 12, le conducteur peut même annuler directement le changement de voie de circulation en actionnant le bouton d'annulation 14.

Par ailleurs, pendant la phase de confirmation PhC de changement de voie de circulation, un changement de vitesse du véhicule ne peut pas être proposé au conducteur par l'intermédiaire du module d'affichage 11. En effet, l'affichage E21 du message de proposition de changement de vitesse est inhibé pendant la phase de confirmation PhC de changement de voie de circulation.

Pendant cette phase de confirmation, il n'y a donc pas d'ambiguïté quant au fait que l'actionnement du bouton de validation 13 correspond à une confirmation de changement de voie de circulation, c'est-à-dire à une confirmation d'autorisation à réaliser la manœuvre autonome de changement de voie de circulation.

Dans le procédé d'aide à la conduite décrit ici, il est prévu en particulier de réaliser l'affichage E21 du message de proposition de changement de vitesse après ladite phase de confirmation PhC, lorsque la configuration routière adaptée à un changement de vitesse du véhicule est détectée pendant ladite phase de confirmation.

Il est également prévu, ici, de déclencher une manœuvre autonome de changement de vitesse du véhicule (étape E24 sur les figures 2 à 4) lorsque le bouton de validation 13 est actionné après l'affichage E21 du message de proposition de changement de vitesse.

Le conducteur peut ainsi utiliser le même bouton de validation 13 pour autoriser aussi bien un changement de voie de circulation qu'un changement de vitesse du véhicule, et cela sans confusion possible entre ces deux manœuvres grâce à l'inhibition de l'affichage E21 du message de proposition de changement de vitesse du véhicule pendant la phase de confirmation PhC de changement de voie de circulation.

Le message de demande de confirmation de changement de voie de circulation, désigné également dans la suite comme le deuxième message, peut par exemple comprendre des expressions telles que « voulez-vous vraiment dépasser ? », « confirmez le dépassement », ou encore « confirmez le changement de voie de circulation ». Ce message pourrait aussi comprendre un pictogramme, telle qu'une flèche dirigée vers une voie de circulation de destination, accompagné d'un point d'interrogation.

Le message de proposition de changement de vitesse du véhicule, désigné également dans la suite comme le troisième message, peut par exemple comprendre des expressions telles que « ralentir ? », « accélérer ? », « rouler à la vitesse maximale autorisée ? », « rouler à 130 kilomètres par heure ? ».

La configuration routière adaptée au changement de vitesse du véhicule peut correspondre notamment :
- à une situation à partir de laquelle ce changement de vitesse devient possible, par exemple du fait que le véhicule sort d'une section routière sur laquelle la vitesse était limitée,
- à une situation dans laquelle ce changement de vitesse parait nécessaire, par exemple du fait que le véhicule entre sur une section routière sur laquelle la vitesse maximale autorisée est réduite.

La configuration routière adaptée au changement de vitesse du véhicule est détectée par l'unité de commande sur la base notamment desdites données représentatives de l'environnement routier du véhicule, cette détection étant par exemple réalisée au moyen d'un traitement d'image permettant de détecter un panneau routier de limitation de vitesse ou de fin de limitation de vitesse.

Ici, cette configuration routière est détectée par l'unité de commande en fonction en outre desdites données cartographiques et de positionnement du véhicule. Grâce à la prise en compte de ces données, la configuration routière adaptée au changement de vitesse du véhicule peut être détectée de manière anticipée, avant que le véhicule 1 n'atteigne une position donnée X au niveau de laquelle se rencontre cette configuration.

A titre d'exemple, les données cartographiques et de positionnement du véhicule peuvent indiquer qu'une route nationale se prolonge, à une distance donnée en avant du véhicule, sous la forme d'une autoroute. Dans ce cas, l'unité de commande détecte la configuration adaptée à un changement de vitesse du véhicule bien avant que le véhicule n'atteigne la position donnée au niveau de laquelle débute la section d'autoroute, par exemple 1 ou plusieurs kilomètres à l'avance.

Lorsque la configuration routière est détectée ainsi de manière anticipée, et que la manœuvre autonome de changement de vitesse du véhicule est déclenchée par le conducteur (par actionnement du bouton de validation), alors, cette manœuvre est réalisée lorsque le véhicule atteint la position donnée X, à condition qu'un panneau routier de limitation de vitesse ou de fin de limitation de vitesse, confirmant que la vitesse proposée au conducteur est autorisée, soit détecté à la position X.

Dans le procédé d'aide à la conduite décrit ici, il est prévu par ailleurs que la phase de confirmation PhC de changement de voie de circulation se termine lorsqu'une durée donnée t₂ₘₐₓ s'est écoulée, sans actionnement dudit bouton de validation 13, depuis l'actionnement dudit organe de commande 12.

Autrement formulé, la durée de la phase de confirmation PhC de changement de voie de circulation est limitée, au maximum, à cette durée donnée t₂ₘₐₓ. La durée donnée t₂ₘₐₓ est par exemple comprise entre 1 seconde et 10 secondes.

La phase de confirmation PhC de changement de voie de circulation peut ainsi se terminer :
- soit parce que le conducteur a confirmé le changement de voie de circulation en actionnant le bouton de validation 13,
- soit parce que la durée t₂ₘₐₓ réservée à cette confirmation s'est écoulée sans confirmation,
- soit parce que le conducteur a infirmé le changement de voie de circulation, c'est-à-dire qu"il s'est opposé à ce changement de voie de circulation, en actionnant le bouton d'annulation 14.

Une fois la phase de confirmation terminée (quelle que soit la raison pour laquelle elle se termine), l'affichage E21 du message de proposition de changement de voie de circulation peut être réalisé.

Le conducteur du véhicule 1 peut déclencher la phase de confirmation PhC de changement de voie de circulation, par l'actionnement de l'organe de commande 12 (ici par l'actionnement de la manette de commande des clignotants), de sa propre initiative, qui, sans y avoir été invité par le véhicule 1.

Pour aider encore plus le conducteur dans la conduite du véhicule 1, l'unité de commande est programmée en outre, ici, pour exécuter les étape suivantes :
E10- détection d'une configuration routière adaptée à un changement de voie de circulation du véhicule, la détection de cette configuration routière adaptée à un changement de voie de circulation déclenchant une phase de proposition de changement de voie de circulation PhP comprenant l'étape suivante :
E11- affichage d'un message de proposition de changement de voie de circulation par ledit module d'affichage 11.

La configuration routière adaptée à un changement de voie de circulation peut correspondre notamment à une situation dans laquelle le véhicule circule sur une route présentant plusieurs voies de circulation de même sens, et dans laquelle un autre véhicule, plus lent, est détecté devant le véhicule 1.

La configuration routière adaptée au changement de vitesse du véhicule est détectée par l'unité de commande sur la base notamment desdites données représentatives de l'environnement routier du véhicule, par exemple au moyen d'un traitement d'image permettant de détecter des bandes de marquage au sol et d'autres véhicules circulant sur la même route que celle empruntée par le véhicule 1 équipé du dispositif d'aide à la conduite. Ici, cette configuration routière est détectée en outre en tenant compte des données cartographiques et de positionnement du véhicule 1.

Le message de proposition de changement de vitesse du véhicule, désigné également dans la suite comme le premier message, peut par exemple comprendre des expressions telles que « dépasser ? », ou « se rabattre à droite ? ».

Suite à l'affichage E11 de ce message de proposition de changement de voie de circulation, le conducteur peut décider de demander ou d'autoriser au véhicule 1 de réaliser la manœuvre autonome de changement de voie de circulation correspondante.

Pour cela, il actionne alors l'organe de commande 12 susmentionné (ici la manette de commande des clignotants), ce qui déclenche la phase de confirmation PhC de changement de voie de circulation.

Le déclenchement de cette phase de confirmation PhC met alors fin à la phase de proposition de changement de voie de circulation PhP et à l'affichage E11 du premier message.

Suite à l'affichage E11 de ce message de proposition de changement de voie de circulation, le conducteur peut aussi décider de ne pas demander au véhicule 1 de changer de voie de circulation, ou de ne pas autoriser le véhicule 1 à changer de voie de circulation. Dans ce cas, le conducteur n'actionne pas l'organe de commande 12 précité.

Après qu'une durée limite donnée t₁ₘₐₓ se soit écoulée sans actionnement de l'organe de commande 12, l'unité de commande met fin à la phase de proposition de changement de voie de circulation PhP.

Ainsi, la phase de proposition de changement de voie de circulation PhP se termine lorsque le message de proposition de changement de voie de circulation a été affiché pendant ladite durée limite donnée t₁ₘₐₓ, sans actionnement de l'organe de commande 12. L'affichage E11 du premier message cesse lorsque la phase de proposition de changement de voie de circulation PhP se termine.

La durée limite donnée t₁ₘₐₓ est par exemple comprise entre 1 seconde et 10 secondes.

Pour éviter tout conflit ou ambiguïté d'interprétation, il est prévu ici, pendant la phase de proposition de changement de voie de circulation PhP, d'inhiber l'affichage E21 du message de proposition de changement de vitesse.

Cette disposition permet d'éviter avantageusement un affichage simultané du premier message et du troisième message.

Il est prévu en particulier, lorsque la configuration routière adaptée au changement de vitesse du véhicule est détectée pendant la phase de proposition de changement de voie de circulation PhP, d'afficher le message de proposition de changement de vitesse après la phase de proposition de changement de voie de circulation PhP.

Dans ce cas, lorsque la phase de proposition de changement de voie de circulation PhP se termine sans déclenchement de la phase de confirmation PhC, le troisième message est alors affiché (étape E21) dès la fin de la phase de proposition, et donc dès que l'affichage E11 du premier message a cessé.

En revanche, lorsque la phase de proposition de changement de voie de circulation PhP se termine du fait du déclenchement de la phase de confirmation PhC, le message de proposition de changement de vitesse est alors affiché non seulement après cette phase de proposition, mais aussi, comme déjà indiqué, après la phase de confirmation PhC de changement de voie de circulation. Dans ce cas, le troisième message est donc affiché seulement une fois que l'affichage du premier message et que l'affichage du deuxième message ont cessés.

Si une configuration routière adaptée à un changement de vitesse du véhicule est détectée, de manière anticipée, puis qu'une configuration adaptée à un changement de voie circulation est détectée ensuite, marquant le début de la phase de proposition de changement de voie de circulation PhP,
alors, l'affichage du troisième message est suspendu (il est inhibé) pendant toute la phase de proposition de changement de voie de circulation PhP, puis, s'il y a lieu (comme expliqué ci-dessus), pendant toute la phase de confirmation PhC (le troisième message est alors affiché après la phase de proposition, voire après la phase de confirmation).

Comme la détection de cette configuration routière, adaptée à un changement de vitesse du véhicule, a été réalisée de manière anticipée, nettement avant que le véhicule n'atteigne ladite position X, cette configuration peut être signalée au conducteur, avant que le véhicule n'atteigne ladite position X, et cela même si l'affichage du troisième message est suspendu pendant une durée donnée, comme expliqué ci-dessus (plus précisément pendant les phases de proposition et de confirmation).

Grâce à cette capacité de l'unité de commande de détecter de manière anticipée une telle configuration routière adaptée à un changement de vitesse, il est possible, comme expliqué ci-dessus, d'éviter un affichage simultané (potentiellement perturbant pour le conducteur) des deuxième et troisième messages, sans pour autant renoncer à afficher l'un de ces deux messages.

Dans une variante de ce procédé d'aide à la conduite, les étapes de détection de la configuration adaptée à un changement de voie de circulation, et d'affichage du premier message pourraient être omises, le procédé ne comprenant alors pas la phase de proposition de changement de voie de circulation. Dans ce cas, la phase de confirmation de changement de voie de circulation est systématiquement déclenchée par le conducteur de sa propre initiative, sans affichage préalable du premier message proposant cette manœuvre.

Comme cela a été décrit ci-dessus, il est prévu dans ce procédé d'aide à la conduite de prendre en compte différents évènements et actions relatifs à la manœuvre autonome de changement de voie de circulation, pour inhiber, ou autoriser, l'affichage du troisième message relatif à la manœuvre autonome de changement de vitesse du véhicule.

Dans ce procédé, il est prévu en outre, de manière optionnelle, de prendre en compte différents évènements et actions relatifs à la manœuvre autonome de changement de vitesse du véhicule, pour éventuellement inhiber l'affichage du premier message de proposition de changement de voie de circulation.

Plus précisément, il est prévu ici :
- lorsque la manœuvre autonome de changement de vitesse du véhicule a été déclenchée, et qu'une configuration routière adaptée à un changement de voie de circulation du véhicule est ensuite détectée,
- d'inhiber l'affichage E11 du message de proposition de changement de voie de circulation tant que la manœuvre de changement de vitesse du véhicule n'a pas été effectuée, puis de

E17- tester à nouveau si le véhicule est situé dans une configuration adaptée à un changement de voie de circulation.

Le déclenchement de la manœuvre autonome de changement de vitesse du véhicule entraîne un changement de vitesse du véhicule qui peut rendre la situation dans laquelle se trouve le véhicule inadaptée à un changement de voie de circulation.

A titre d'exemple, une configuration routière initialement adaptée au dépassement d'un autre véhicule peut devenir inadaptée à un tel dépassement suite à une diminution (autonome) de vitesse du véhicule, consécutive à une diminution de la vitesse maximale autorisée sur la route empruntée par le véhicule.

Lorsque la manœuvre autonome de changement de vitesse du véhicule a été déclenchée, et qu'une configuration routière adaptée à un changement de voie de circulation du véhicule est ensuite détectée, il est donc particulièrement intéressant d'attendre que la vitesse du véhicule ait effectivement changé puis, comme ici, de tester à nouveau si le véhicule est situé dans une configuration adaptée à un changement de voie de circulation avant d'autoriser l'affichage E11 du message de proposition de changement de voie de circulation.

Par ailleurs, dans le cas d'une détection anticipée de la configuration adaptée au changement de vitesse du véhicule, la manœuvre de changement de vitesse du véhicule peut être déclenchée par le conducteur nettement avant que le véhicule n'atteigne la position donnée X, à partir de laquelle se rencontre cette configuration. La perspective de changement de vitesse du véhicule est alors lointaine. Dans ce cas, il est peu utile d'inhiber l'affichage E11 du message de proposition de changement de voie de circulation.

Aussi est-il prévu ici d'inhiber l'affichage E11 du message de proposition de changement de voie de circulation à condition en outre que la distance entre le véhicule 1 et ladite position donnée X soit inférieure à une distance limite donnée. Cette distance limite donnée peut par exemple être comprise entre 1 et 300 mètres.

L'enchaînement des étapes du procédé d'aide à la conduite qui a été décrit ci-dessus est présenté maintenant, en référence aux figures 2 à 4, pour trois exemples différents de scénarios de conduite du véhicule.

Sur les figures 2 à 4, les étapes de ce procédé sont représentées au cours du temps t, sous la forme d'une séquence temporelle. Sur ces figures, le temps t s'écoule du haut vers le bas.

Dans l'exemple de scénario routier de la figure 2, le véhicule rencontre tout d'abord une configuration routière adaptée à un changement de voie de circulation, suivie de près par la détection d'une configuration adaptée à un changement de vitesse du véhicule. Par ailleurs, dans cet exemple, suite à l'affichage du premier message, le conducteur actionne la manette de commande des clignotants, indiquant ainsi qu'il souhaite ou autorise le changement de voie de circulation.

Les étapes du procédé d'aide à la conduite s'enchainent alors, au cours du temps, de la manière suivante :
E10 - détection de la configuration adaptée à un changement de voie de circulation ; puis
E11 - affichage du premier message par le module d'affichage 11 ; puis
E20 - détection de la configuration adaptée à un changement de vitesse du véhicule, en l'occurrence de manière anticipée, ladite configuration adaptée au changement de vitesse du véhicule étant située à une position donnée X en avant du véhicule 1 ; puis
E12 - détection de l'actionnement de la manette de commande des clignotants ; puis
E13 - affichage du deuxième message par le module d'affichage 11 ; puis
E14 - détection de l'actionnement du bouton de validation 13 ; puis
E15 - réalisation de la manœuvre autonome de changement de voie de circulation ; puis
E21 - affichage du troisième message par le module d'affichage 11 ; puis
E22 - détection de l'actionnement du bouton de validation 13 ; puis
E23 - détermination du fait que le véhicule a atteint ladite position donnée X ; puis
E24 - réalisation de la manœuvre autonome de changement de vitesse du véhicule.

Comme représenté sur la figure 2, l'étape E10 marque le début de la phase de proposition de changement de voie de circulation PhP.

L'étape E12 met fin à la phase de proposition de changement de voie de circulation PhP, et donc à l'affichage du premier message, et déclenche la phase de confirmation PhC de changement de voie de circulation.

L'étape E15 quant à elle met fin à la phase de confirmation PhC.

Comme indiqué précédemment, pendant les phases de proposition et de confirmation de changement de voie de circulation PhP et PhC, l'affichage du troisième message est inhibé, ce qui est représenté symboliquement par la flèche INH_m3.

Dans cet exemple de séquence d'événements, le conducteur actionne la manette de commande des clignotants un temps t₁ après le début de l'affichage du premier message, ce temps t₁ étant inférieur à la durée limite t₁ₘₐₓ maximale réservée à la phase de proposition PhP. Le conducteur actionne par ailleurs le bouton de validation 13 un temps t₂ après avoir actionné la manette de commande des clignotants, ce temps t₂ étant inférieur à la durée t₂ₘₐₓ maximale réservée à la phase de proposition PhP.

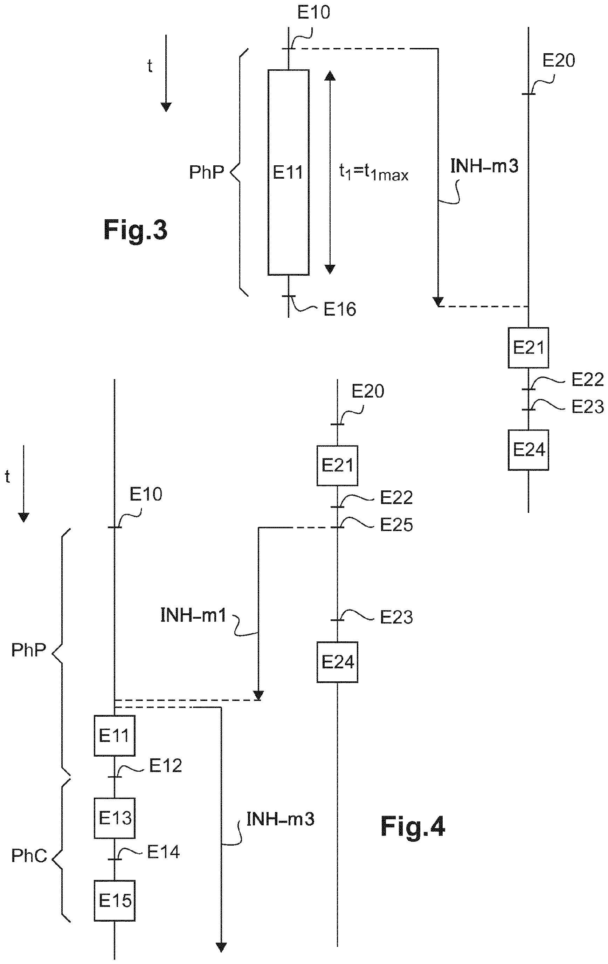

Dans l'exemple de scénario routier de la figure 3, le véhicule 1 rencontre tout d'abord une configuration routière adaptée à un changement de voie de circulation, suivie de près par la détection d'une configuration adaptée à un changement de vitesse du véhicule. Mais dans cet exemple, à la différence de celui de la figure 2, le conducteur n'actionne pas la manette de commande des clignotants, suite à l'affichage du message de proposition de changement de voie de circulation.

Les étapes du procédé d'aide à la conduite s'enchainent alors, au cours du temps, de la manière suivante : E10 ; puis E11 ; puis
E20, la configuration adaptée à un changement de vitesse du véhicule étant détectée de manière anticipée, ladite configuration adaptée au changement de vitesse du véhicule étant située à une position donnée X en avant du véhicule 1 ; puis
E16 - détection du fait que le premier message a été affiché pendant une durée t1 égale à ladite durée limite t₁ₘₐₓ ; puis
E21; puis E22 ; puis E23 ; puis E24.

Dans cet exemple de séquence d'événements, la phase de proposition de changement de voie de circulation PhP se termine à l'étape E16 sans que le conducteur n'ait actionné la manette de commande des clignotants. Aussi, dans cet exemple, la manœuvre autonome de changement de voie de circulation proposée par l'intermédiaire du premier message n'est pas réalisée.

Dans l'exemple de scénario routier de la figure 4, une configuration adaptée à un changement de vitesse du véhicule est tout d'abord détectée, de manière anticipée, suivie par un déclenchement de la manœuvre autonome de changement de vitesse du véhicule correspondante. Une configuration routière adaptée à un changement de voie de circulation est alors détectée, avant que le véhicule n'ait atteint la position donnée X au niveau de laquelle est située la configuration adaptée au changement de vitesse du véhicule.

Dans cet exemple, les étapes du procédé d'aide à la conduite s'enchainent alors au cours du temps de la manière suivante :
E20, la configuration adaptée à un changement de vitesse du véhicule étant détectée de manière anticipée, ladite configuration adaptée au changement de vitesse du véhicule étant située à une position donnée X en avant du véhicule 1 ; puis
E21 ; puis E22 ; puis
E25 - détermination du fait que la distance entre le véhicule 1 et ladite position donnée X est inférieure à ladite distance limite donnée ; puis
E10 (détection de la configuration adaptée à un changement de voie de circulation) ; puis
E23 ; puis E24 ; puis
E17- test, à nouveau, du fait que le véhicule est situé dans une configuration adaptée à un changement de voie de circulation (le test précédent étant réalisé à l'étape de détection E10) ; puis
E11 (affichage du premier message par le module d'affichage 11) ; puis E12 ; puis E13 ; puis E14 ; puis E15.

Comme expliqué précédemment, dans un tel exemple de séquence d'événements, l'affichage E11 du premier message, consécutif à la détection E10 de la configuration routière adaptée à un changement de voie de circulation, est inhibé jusqu'à ce que la manœuvre autonome de changement de vitesse ait été réalisée, ce qui est représenté symboliquement par la flèche INH_m1.

Par ailleurs, dans cet exemple de séquence d'événements, le résultat de l'étape de test E17 est que la situation du véhicule correspond à une configuration adapté à un changement de voie de circulation, après le changement de vitesse réalisé à l'étape E24. Ainsi, après l'étape E17, le procédé se poursuit ici par les étapes E11 à E15 relatives au déclenchement de la manœuvre autonome de changement de voie de circulation.

## Revendications

1. Procédé d'aide à la conduite d'un véhicule (1), comprenant les étapes suivantes :
- (E12) détection de l'actionnement d'un organe de commande (12) donné du véhicule (1), ladite détection déclenchant une phase de confirmation (PhC) de changement de voie de circulation comprenant les étapes suivantes :
- (E13) affichage d'un message de demande de confirmation de changement de voie de circulation par un module d'affichage (11), et
- (E14) détection de l'actionnement d'un bouton de validation (13), la détection de l'actionnement du bouton de validation déclenchant une manœuvre autonome de changement de voie de circulation (E15) mettant fin à ladite phase de confirmation (PhC),
- (E20) détection d'une configuration routière adaptée à un changement de vitesse du véhicule, la détection de ladite configuration entraînant l'affichage (E21) d'un message de proposition de changement de vitesse du véhicule par ledit module d'affichage (11), ledit procédé étant **caractérisé en ce que**
l'affichage (E21) du message de proposition de changement de vitesse est inhibé pendant la phase de confirmation (PhC) de changement de voie de circulation.

2. Procédé selon la revendication 1, dans lequel l'affichage (E21) du message de proposition de changement de vitesse est réalisé après ladite phase de confirmation (PhC) lorsque la configuration routière adaptée à un changement de vitesse du véhicule est détectée pendant ladite phase de confirmation.

3. Procédé selon l'une des revendications 1 et 2, dans lequel une manœuvre autonome de changement de vitesse du véhicule est déclenchée lorsque ledit bouton de validation (13) est actionné (E22) après l'affichage (E21) du message de proposition de changement de vitesse.

4. Procédé selon l'une des revendications 1 à 3, dans lequel ladite phase de confirmation (PhC) se termine lorsqu'une durée donnée (t₂ₘₐₓ) s'est écoulée sans actionnement dudit bouton de validation (13) depuis l'actionnement dudit organe de commande (12) du véhicule.

5. Procédé selon l'une des revendications 1 à 4, comprenant en outre les étapes suivantes :
- (E10) détection d'une configuration routière adaptée à un changement de voie de circulation du véhicule, la détection de cette configuration routière adaptée à un changement de voie de circulation déclenchant une phase de proposition de changement de voie de circulation (PhP) comprenant l'étape suivante :
- (E11) affichage d'un message de proposition de changement de voie de circulation par ledit module d'affichage (11).

6. Procédé selon la revendication 5, dans lequel la phase de proposition de changement de voie de circulation (PhP) se termine lorsque le message de proposition de changement de voie de circulation a été affiché pendant une durée limite donnée (t₁ₘₐₓ).

7. Procédé selon l'une des revendications 5 et 6, dans lequel le déclenchement de ladite phase de confirmation (PhC) met fin à la phase de proposition de changement de voie de circulation (PhP).

8. Procédé selon l'une des revendications 5 à 7, dans lequel :
- l'affichage (E21) du message de proposition de changement de vitesse est inhibé pendant la phase de proposition de changement de voie de circulation (PhP), et,
- lorsque la configuration routière adaptée au changement de vitesse du véhicule est détectée pendant la phase de proposition de changement de voie de circulation (PhP), alors, le message de proposition de changement de vitesse est affiché après ladite phase de proposition.

9. Procédé selon la revendication 8, prise dans la dépendance de la revendication 7, dans lequel :
lorsque la configuration routière adaptée au changement de vitesse du véhicule est détectée pendant la phase de proposition de changement de voie de circulation (PhP), et que ladite phase de proposition se termine du fait du déclenchement de ladite phase de confirmation (PhC),
alors, le message de proposition de changement de vitesse est affiché après la phase de confirmation (PhC) de changement de voie de circulation.

10. Procédé selon l'une des revendications 1 à 9, dans lequel
- la configuration routière adaptée à un changement de vitesse du véhicule est détectée de manière anticipée, avant que le véhicule n'atteigne une position donnée au niveau de laquelle se rencontre cette configuration adaptée à un changement de vitesse du véhicule, et dans lequel,
- la manœuvre autonome de changement de vitesse du véhicule est réalisée (E24) lorsque le véhicule atteint ladite position donnée (E23).

11. Procédé selon la revendication 10 prise dans la dépendance de l'une des revendications 5 à 9, dans lequel il est prévu :
lorsque la manœuvre autonome de changement de vitesse du véhicule a été déclenchée (E22), et qu'une configuration routière adaptée à un changement de voie de circulation du véhicule est ensuite détectée (E10),
- d'inhiber l'affichage du message de proposition de changement de voie de circulation (INH_m1) tant que la manœuvre de changement de vitesse du véhicule n'a pas été effectuée, puis de
- (E17) tester à nouveau si le véhicule (1) est situé dans une configuration adaptée à un changement de voie de circulation.

12. Procédé selon la revendication 11 dans lequel l'affichage (E11) du message de proposition de changement de voie de circulation est inhibé à condition en outre que la distance entre le véhicule (1) et ladite position donnée soit inférieure à une distance limite donnée.

13. Procédé selon l'une des revendications 1 à 12, dans lequel ledit organe de commande (12) est une manette de commande des clignotants du véhicule.

14. Dispositif d'aide à la conduite (10) pour un véhicule (1), le dispositif d'aide à la conduite comprenant une unité de commande programmée pour exécuter les étapes suivantes :
- (E12) détection de l'actionnement d'un organe de commande (12) donné du véhicule (1), ladite détection déclenchant une phase de confirmation (PhC) de changement de voie de circulation comprenant les étapes suivantes :
- (E13) affichage d'un message de demande de confirmation de changement de voie de circulation par un module d'affichage (11), et
- (E14) détection de l'actionnement d'un bouton de validation (13), la détection de l'actionnement du bouton de validation déclenchant une manœuvre autonome de changement de voie de circulation (E15) mettant fin à ladite phase de confirmation (PhC),
- (E20) détection d'une configuration routière adaptée à un changement de vitesse du véhicule, la détection de ladite configuration entraînant l'affichage (E21) d'un message de proposition de changement de vitesse du véhicule par ledit module d'affichage (11),
ladite unité de commande étant **caractérisée en ce qu'** elle est aussi programmée pour exécuter l'étape suivante: l'affichage (E21) du message de proposition de changement de vitesse étant inhibé pendant la phase de confirmation (PhC) de changement de voie de circulation.

15. Dispositif d'aide à la conduite (10) selon la revendication 14, dans lequel l'unité de commande programmée pour exécuter l'étape d'affichage (E21) du message de proposition de changement de vitesse étant réalisé après ladite phase de confirmation (PhC), lorsque la configuration routière adaptée à un changement de vitesse du véhicule est détectée pendant ladite phase de confirmation.

## Patentansprüche

1. Fahrassistenzverfahren für ein Fahrzeug (1), die folgenden Schritte umfassend:
- (E12) Erkennung der Betätigung eines bestimmten Steuerorgans (12) des Fahrzeugs (1), wobei die Erkennung eine Phase der Bestätigung (PhC) eines Fahrspurwechsels auslöst, welche die folgenden Schritte umfasst:
- (E13) Anzeige einer Anforderungsnachricht für die Bestätigung eines Fahrspurwechsels durch ein Anzeigemodul (11), und
- (E14) Erkennung der Betätigung einer Validierungstaste (13), wobei die Erkennung der Betätigung der Validierungstaste ein autonomes Fahrspurwechselmanöver (E15) auslöst, welches die Bestätigungsphase (PhC) beendet,
- (E20) Erkennung einer Straßenkonfiguration, die für eine Geschwindigkeitsänderung des Fahrzeugs geeignet ist, wobei die Erkennung dieser Konfiguration die Anzeige (E21) einer Nachricht mit dem Vorschlag einer Geschwindigkeitsänderung des Fahrzeugs durch das Anzeigemodul (11) zur Folge hat, wobei das Verfahren **dadurch gekennzeichnet ist, dass** die Anzeige (E21) der Nachricht mit dem Vorschlag einer Geschwindigkeitsänderung während der Phase der Bestätigung (PhC) eines Fahrspurwechsels verhindert wird.

2. Verfahren nach Anspruch 1, wobei die Anzeige (E21) der Nachricht mit dem Vorschlag einer Geschwindigkeitsänderung nach der Bestätigungsphase (PhC) erfolgt, wenn die Straßenkonfiguration, die für eine Geschwindigkeitsänderung des Fahrzeugs geeignet ist, während der Bestätigungsphase erkannt wird.

3. Verfahren nach einem der Ansprüche 1 und 2, wobei ein autonomes Manöver der Geschwindigkeitsänderung des Fahrzeugs ausgelöst wird, wenn die Validierungstaste (13) nach der Anzeige (E21) der der Nachricht mit dem Vorschlag einer Geschwindigkeitsänderung betätigt (E22) wird.

4. Verfahren nach einem der Ansprüche 1 bis 3, wobei die Bestätigungsphase (PhC) endet, wenn seit der Betätigung des Steuerorgans (12) des Fahrzeugs eine vorgegebene Zeit (t₂ₘₐₓ) ohne Betätigung der Validierungstaste (13) vergangen ist.

5. Verfahren nach einem der Ansprüche 1 bis 4, welches außerdem die folgenden Schritte umfasst:
- (E10) Erkennung einer Straßenkonfiguration, die für einen Fahrspurwechsel des Fahrzeugs geeignet ist, wobei die Erkennung dieser Straßenkonfiguration, die für einen Fahrspurwechsel geeignet ist, eine Phase des Vorschlags eines Fahrspurwechsels (PhP) auslöst, welche den folgenden Schritt umfasst:
- (E11) Anzeige einer Nachricht mit dem Vorschlag eines Fahrspurwechsels durch das Anzeigemodul (11).

6. Verfahren nach Anspruch 5, wobei die Phase des Vorschlags eines Fahrspurwechsels (PhP) endet, wenn die Nachricht mit dem Vorschlag eines Fahrspurwechsels während einer vorgegebenen begrenzten Zeitdauer (t₁ₘₐₓ) angezeigt worden ist.

7. Verfahren nach einem der Ansprüche 5 und 6, wobei die Auslösung der Bestätigungsphase (PhC) die Phase des Vorschlags eines Fahrspurwechsels (PhP) beendet.

8. Verfahren nach einem der Ansprüche 5 bis 7, wobei:
- die Anzeige (E21) der Nachricht mit dem Vorschlag einer Geschwindigkeitsänderung während der Phase des Vorschlags eines Fahrspurwechsels (PhP) verhindert wird, und
- wenn die Straßenkonfiguration, die für die Geschwindigkeitsänderung des Fahrzeugs geeignet ist, während der Phase des Vorschlags eines Fahrspurwechsels (PhP) erkannt wird, die Nachricht mit dem Vorschlag einer Geschwindigkeitsänderung dann nach dieser Phase des Vorschlags angezeigt wird.

9. Verfahren nach Anspruch 8 in Abhängigkeit von Anspruch 7, wobei:
wenn die Straßenkonfiguration, die für die Geschwindigkeitsänderung des Fahrzeugs geeignet ist, während der Phase des Vorschlags eines Fahrspurwechsels (PhP) erkannt wird, und wenn diese Phase des Vorschlags aufgrund der Auslösung der Bestätigungsphase (PhC) endet,
die Nachricht mit dem Vorschlag einer Geschwindigkeitsänderung dann nach der Phase der Bestätigung (PhC) eines Fahrspurwechsels angezeigt wird.

10. Verfahren nach einem der Ansprüche 1 bis 9, wobei
- die Straßenkonfiguration, die für eine Geschwindigkeitsänderung des Fahrzeugs geeignet ist, im Voraus erkannt wird, bevor das Fahrzeug eine vorgegebene Position erreicht, an welcher diese für eine Geschwindigkeitsänderung des Fahrzeugs geeignete Konfiguration angetroffen wird, und wobei
- das autonome Manöver der Geschwindigkeitsänderung des Fahrzeugs durchgeführt wird (E24), wenn das Fahrzeug die vorgegebene Position erreicht (E23).

11. Verfahren nach Anspruch 10 in Abhängigkeit von einem der Ansprüche 5 bis 9, wobei vorgesehen ist:
wenn das autonome Manöver der Geschwindigkeitsänderung des Fahrzeugs ausgelöst worden ist (E22) und wenn anschließend eine Straßenkonfiguration, die für einen Fahrspurwechsel des Fahrzeugs geeignet ist, erkannt wird (E10),
- die Anzeige der Nachricht mit dem Vorschlag eines Fahrspurwechsels zu verhindern (INH_m1), solange das Manöver der Geschwindigkeitsänderung des Fahrzeugs nicht durchgeführt worden ist, und anschließend
- (E17) erneut zu prüfen, ob sich das Fahrzeug (1) in einer Konfiguration befindet, die für einen Fahrspurwechsel geeignet ist.

12. Verfahren nach Anspruch 11, wobei die Anzeige (E11) der Nachricht mit dem Vorschlag eines Fahrspurwechsels außerdem unter der Bedingung verhindert wird, dass der Abstand zwischen dem Fahrzeug (1) und der vorgegebenen Position kleiner als ein vorgegebener Grenzabstand ist.

13. Verfahren nach einem der Ansprüche 1 bis 12, wobei das Steuerorgan (12) ein Bedienhebel der Fahrtrichtungsanzeiger des Fahrzeugs ist.

14. Fahrassistenzvorrichtung (10) für ein Fahrzeug (1), wobei die Fahrassistenzvorrichtung eine Steuereinheit umfasst, die dafür programmiert ist, die folgenden Schritte auszuführen:
- (E12) Erkennung der Betätigung eines bestimmten Steuerorgans (12) des Fahrzeugs (1), wobei die Erkennung eine Phase der Bestätigung (PhC) eines Fahrspurwechsels auslöst, welche die folgenden Schritte umfasst:
- (E13) Anzeige einer Anforderungsnachricht für die Bestätigung eines Fahrspurwechsels durch ein Anzeigemodul (11), und
- (E14) Erkennung der Betätigung einer Validierungstaste (13), wobei die Erkennung der Betätigung der Validierungstaste ein autonomes Fahrspurwechselmanöver (E15) auslöst, welches die Bestätigungsphase (PhC) beendet,
- (E20) Erkennung einer Straßenkonfiguration, die für eine Geschwindigkeitsänderung des Fahrzeugs geeignet ist, wobei die Erkennung dieser Konfiguration die Anzeige (E21) einer Nachricht mit dem Vorschlag einer Geschwindigkeitsänderung des Fahrzeugs durch das Anzeigemodul (11) zur Folge hat, wobei die Steuereinheit **dadurch gekennzeichnet ist, dass** sie außerdem dafür programmiert ist, den folgenden Schritt auszuführen:
die Anzeige (E21) der Nachricht mit dem Vorschlag einer Geschwindigkeitsänderung wird während der Phase der Bestätigung (PhC) eines Fahrspurwechsels verhindert.

15. Fahrassistenzvorrichtung (10) nach Anspruch 14, wobei die Steuereinheit dafür programmiert ist, den Schritt einer Anzeige (E21) der Nachricht mit dem Vorschlag einer Geschwindigkeitsänderung nach der Bestätigungsphase (PhC) auszuführen, wenn die Straßenkonfiguration, die für eine Geschwindigkeitsänderung des Fahrzeugs geeignet ist, während der Bestätigungsphase erkannt wird.

## Claims

1. Method for assisting with driving a vehicle (1), comprising the following steps:
- (E12) detecting the actuation of a given control member (12) of the vehicle (1), said detection triggering a change-of-lane confirmation phase (PhC) comprising the following steps:
- (E13) displaying a message requesting change-of-lane confirmation using a display module (11), and
- (E14) detecting the actuation of a validation button (13), the detection of the actuation of the validation button triggering an automatic change-of-lane manoeuvre (E15) that brings to an end said confirmation phase (PhC),
- (E20) detecting a road configuration suitable for a change of speed of the vehicle, the detection of said configuration leading to the display (E21) of a message proposing to change the speed of the vehicle using said display module (11), said method being **characterized in that**
the display (E21) of the message proposing to change speed is inhibited during the change-of-lane confirmation phase (PhC).

2. Method according to Claim 1, wherein the message proposing to change speed is displayed (E21) after said confirmation phase (PhC) when the road configuration suitable for a change of speed of the vehicle is detected during said confirmation phase.

3. Method according to one of Claims 1 and 2, wherein an automatic manoeuvre that changes the speed of the vehicle is triggered when said validation button (13) is actuated (E22) after the display (E21) of the message proposing to change speed.

4. Method according to one of Claims 1 to 3, wherein said confirmation phase (PhC) ends when a given length of time (t₂ₘₐₓ) starting from the actuation of said control member (12) of the vehicle has passed without actuation of said validation button (13).

5. Method according to one of Claims 1 to 4, furthermore comprising the following steps:
- (E10) detecting a road configuration suitable for a change of lane by the vehicle, the detection of this road configuration suitable for a change of lane triggering a change-of-lane proposition phase (PhP) comprising the following steps:
- (E11) displaying a message proposing to change lane using said display module (11).

6. Method according to Claim 5, wherein the change-of-lane proposition phase (PhP) ends when the message proposing to change lane has been displayed for a given limiting length of time (t₁ₘₐₓ).

7. Method according to one of Claims 5 and 6, wherein the triggering of said confirmation phase (PhC) brings to an end the change-of-lane proposition phase (PhP).

8. Method according to one of Claims 5 to 7, wherein:
- the display (E21) of the message proposing to change speed is inhibited during the change-of-lane proposition phase (PhP), and
- when the road configuration suitable for the change of speed of the vehicle is detected during the change-of-lane proposition phase (PhP) then the message proposing to change speed is displayed after said proposition phase.

9. Method according to Claim 8, when dependent on Claim 7, wherein:
when the road configuration suitable for the change of speed of the vehicle is detected during the change-of-lane proposition phase (PhP) and said proposition phase ends because said confirmation phase (PhC) has been triggered,
then the message proposing to change speed is displayed after the change-of-lane confirmation phase (PhC) .

10. Method according to one of Claims 1 to 9, wherein
- the road configuration suitable for a change of speed of the vehicle is detected in anticipation, before the vehicle reaches a given position at which it encounters this configuration suitable for a change of speed of the vehicle, and wherein
- the automatic manoeuvre that changes the speed of the vehicle is carried out (E24) when the vehicle reaches said given position (E23).

11. Method according to Claim 10 when dependent on one of Claims 5 to 9, wherein provision is made:
when the automatic manoeuvre that changes the speed of the vehicle has been triggered (E22), and when a road configuration suitable for a change of lane by the vehicle is then detected (E10),
- to inhibit (INH_m1) the display of the message proposing to change lane as long as the manoeuvre that changes the speed of the vehicle has not been performed, then
- to again test (E17) whether the vehicle (1) is in a configuration suitable for a change of lane.

12. Method according to Claim 11, wherein the display (E11) of the message proposing to change lane is furthermore inhibited as long as the distance between the vehicle (1) and said given position is smaller than a given limiting distance.

13. Method according to one of Claims 1 to 12, wherein said control member (12) is a control lever of the indicators of the vehicle.

14. Driver-assisting device (10) for a vehicle (1), the driver-assisting device comprising a control unit programmed to execute the following steps:
- (E12) detecting the actuation of a given control member (12) of the vehicle (1), said detection triggering a change-of-lane confirmation phase (PhC) comprising the following steps:
- (E13) displaying a message requesting change-of-lane confirmation using a display module (11), and
- (E14) detecting the actuation of a validation button (13), the detection of the actuation of the validation button triggering an automatic change-of-lane manoeuvre (E15) that brings to an end said confirmation phase (PhC),
- (E20) detecting a road configuration suitable for a change of speed of the vehicle, the detection of said configuration leading to the display (E21) of a message proposing to change the speed of the vehicle using said display module (11), said control unit being **characterized in that** it is also programmed to execute the following step:
the display (E21) of the message proposing to change speed is inhibited during the change-of-lane confirmation phase (PhC).

15. Driver-assisting device (10) according to Claim 14, wherein the control unit programmed to execute the step (E21) of displaying the message proposing to change speed is carried out after said confirmation phase (PhC), when the road configuration suitable for a change of speed of the vehicle is detected during said confirmation phase.
